# FASCICULE DE BREVET EUROPEEN

(11) **EP 1 346 145 B1**
(45) Date de publication et mention de la délivrance du brevet: **04.11.2009**
(21) Numéro de dépôt: 01994889.2
(22) Date de dépôt: 18.12.2001
(51) Int. Cl.: F02M 53/04

(54) **DISPOSITIF D'INJECTION D'UN CARBURANT GAZEUX SOUS FORME LIQUIDE POUR MOTEUR A COMBUSTION INTERNE COMPORTANT DES MOYENS DE TRANSFERT DE CHALEUR**
VERFAHREN UND VORRICHTUNG ZUR EINSPRITZUNG VON GASFÖRMIGEM BRENNSTOFF IN FLÜSSIGER PHASE MIT WÄRMEÜBERTRAGUNGSMITTEL, FUR BRENNKRAFTMASCHINE
LIQUID-PHASE GAS FUEL INJECTION METHOD AND DEVICE FOR AN INTERNAL COMBUSTION ENGINE COMPRISING HEAT TRANSFER MEANS

(30) Priorité: 21.12.2000 FR 0016830
(43) Date de publication de la demande: 24.09.2003
(73) Titulaire: Institut Français du Pétrole, 92852 Rueil-Malmaison Cedex (FR)
(72) Inventeur: VENTURI, Stéphane, F-7100 Roiffieux (FR); RADENAC, Erwan, F-78130 Rochefort-en-Yvelines (FR); TILAGONE, Richard, F-38138 Les Côtes d'Arey (FR); BARLESI, Laurent, F-75008 Paris (FR); LE GLEUT, Cyril, F-56650 Inzinzac Lochrist (FR); MONNIER, Gaétan, F-92500 Rueil-Malmaison (FR)
(86) Numéro de dépôt international: PCT/FR2001/004031
(87) Numéro de publication internationale: WO 2002/050425

(56) Documents cités:
- EP-A- 0 915 248
- GB-A- 719 952
- US-A- 5 598 826
- US-A- 5 896 847
- US-A- 5 915 352
- PATENT ABSTRACTS OF JAPAN vol. 016, no. 585 (M-1347), 25 décembre 1992 (1992-12-25) & JP 04 234566 A (TOYOTA MOTOR CORP), 24 août 1992 (1992-08-24)

## Description

La présente invention concerne un dispositif d'injection adapté pour un carburant présentant un point d'ébullition inférieur à la température ambiante (environ 20°C), à la pression atmosphérique (environ 0,1 MPa), tel que par exemple du GPL (gaz de pétrole liquéfié) dans un conduit d'admission d'un moteur à combustion interne.

Pour alimenter en carburant les moteurs à combustion interne, on utilise couramment des injecteurs en général commandés électro-magnétiquement, comprenant un corps qui est fixé sur une rampe d'injection ou sur le répartiteur d'admission du moteur et qui présente un nez muni d'un orifice d'injection du carburant dans le conduit d'admission.

L'injection d'un carburant de type GPL, sous forme liquide, présente l'avantage qu'un volume de carburant relativement petit est introduit par injection, et par voie de conséquence qu'un injecteur relativement compact et de technologie similaire à celle utilisée pour un injecteur essence peut être utilisé. De plus, quand un carburant alternatif tel que du GPL est utilisé dans un véhicule, il est avantageux, pour des raisons économiques, que l'installation initiale dudit véhicule ne soit modifiée que dans un deuxième temps pour ladite utilisation. Ceci est par exemple le cas pour les véhicules automobiles à essence qui sont adaptés ensuite au fonctionnement GPL. L'injection liquide est alors avantageuse car elle permet à moindre coût l'utilisation du système de contrôle initialement présent pour l'injection du carburant liquide initial. Ainsi, on peut obtenir des remplissages optimisés des cylindres, et par suite des performances du moteur similaires à celles obtenues pour une injection essence.

On a pu constater cependant que les dispositifs d'injection proposés jusqu'à ce jour ne permettent pas de résoudre tous les problèmes que pose l'injection du GPL sous la forme liquide:

Ainsi, l'injection du GPL sous forme liquide et sa vaporisation conduit à une diminution de la température de l'air d'admission à proximité de la zone de vaporisation propice à la solidification de l'eau systématiquement contenue dans l'air admis. Dans le cas où le givre résultant se forme au niveau du nez de l'injecteur, ce givre peut par accumulation perturber le contrôle des débits de carburant des injecteurs. D'autre part, le givre peut également obstruer progressivement le conduit d'arrivée d'air (ou répartiteur d'admission). La formation de givre résultante peut conduire donc par accumulation progressive à des perturbations de l'injection et/ou à une obturation progressive du conduit d'admission, et par suite à une diminution du remplissage des cylindres et des performances du moteur. De plus, des blocs de givre peuvent périodiquement être entraînés par l'air admis et provoquer des dommages importants au niveau de la soupape d'admission ainsi que des ratés de combustion provoquant des à-coups de fonctionnement du moteur.

De plus, le répartiteur d'admission d'air peut être construit en un matériau peu conducteur de la chaleur, par exemple en un matériau polymère composite ou non. Dans ce cas, l'air d'admission est peu réchauffé au contact avec les parois du répartiteur et se trouve être à une température relativement faible dans la zone de détente du carburant, ce qui favorise également la formation de givre dans cette zone.

Il a été proprosé dans l'art antérieur d'utiliser un répartiteur d'admission ou une rampe d'injection construit dans un alliage léger conducteur de la chaleur tel que l'aluminium. Cette solution n'évite pas la formation de givre dans tous les cas. En effet, la température de la veine d'air n'est jamais parfaitement homogène et la température moyenne de l'air est la conséquence d'échanges de calories entre l'air et le milieu extérieur, pilotés par les phénomènes de convection et radiation dont l'intensité est principalement liée aux conditions de fonctionnement du moteur. De plus, l'emploi d'un répartiteur d'admission en alliage léger, présente le désavantage de diminuer sensiblement le remplissage du moteur par un réchauffement de l'air d'admission au contact des parois chaudes du répartiteur d'admission.

D'autres solutions plus récentes destinées à résoudre le problème de la formation de givre sur le nez de l'injecteur dans le cas d'une injection GPL liquide ont été décrites.

Ainsi, dans la demande internationale WO 98/10184, un dispositif d'injection de carburant dans la conduite d'admission est décrit comprenant à sa sortie une tige faite d'un matériau isolant entouré d'un matériau conducteur de la chaleur, ladite tige se prolongeant sensiblement jusqu'au centre de la tubulure d'admission. La chaleur nécessaire selon cet art antérieur pour l'évaporation rapide du GPL liquide est fournie principalement par l'air d'admission sans système d'apport extérieur de chaleur au niveau de l'injection. En raison de la température relativement faible de l'air d'admission et du caractère très endothermique de la réaction de vaporisation du GPL liquide, cette solution est cependant difficile à mettre en oeuvre pour prévenir de manière efficace la formation de givre.

La demande de brevet EP 915248 propose un dispositif analogue au précédent en ce qu'il présente également une partie tubulaire prolongeant le nez de l'injecteur et s'étendant sensiblement jusqu'au milieu du conduit d'admission. Le nez de l'injecteur est selon cet art antérieur partiellement en contact thermique avec le moyen prévenant la formation de givre. Cette disposition présente le risque d'occasionner une évaporation du carburant dans le nez de l'injecteur.

Dans les deux dispositifs précédemment décrits, il est nécessaire, au prix d'un surcoût non négligeable, de modifier le profil du répartiteur d'admission et donc de fabriquer des collecteurs d'admission et des injecteurs spécifiques à l'injection des carburants alternatifs tel que le GPL au lieu des collecteurs et des injecteurs classiquement utilisés pour une injection liquide essence.

La présente invention vise à améliorer les conditions d'injection liquide d'un carburant présentant un point d'ébullition inférieur à la température ambiante, à la pression atmosphérique (environ 0,1 MPa), tel que du GPL, afin d'améliorer le fonctionnement des moteurs utilisant un tel carburant. Le carburant en question est donc normalement gazeux à la pression atmosphérique dans la plupart des domaines de température d'utilisation.

Le dispositif objet de l'invention permet de contrôler la formation de givre à proximité de la zone de vaporisation du carburant lors de son injection dans le moteur et d'en assurer ainsi un fonctionnement optimal.

Selon le présent dispositif, il est possible d'adapter avantageusement de matière simple, rapide et peu coûteuse et sans modification importante un système d'injection classique d'un carburant liquide à pression et température classiquement rencontrés au cours de l'utilisation d'un véhicule (P = 0,1 MPa, T entre environ -20°C et environ +40°C), à un système d'injection liquide d'un carburant normalement gazeux tel que par exemple du GPL.

De manière la plus générale le présent dispositif d'injection de carburant liquide, par exemple du GPL, dans un conduit d'admission d'un moteur à combustion interne, comprend au moins un injecteur fixé sur l'embase d'un répartiteur d'admission et au moins un canal de transport du carburant entre l'orifice de sortie de l'injecteur et le conduit d'admission, et des moyens de transfert de chaleur entre une partie chaude du moteur et une portion de la paroi interne dudit canal. Selon l'invention, les moyens de transfert comprennent une plaque en un matériau conducteur thermique intercalée entre l'embase du répartiteur d'admission et la culasse dudit moteur et dans laquelle est ménagée une portion au moins des parois dudit canal et une portion au moins des parois dudit conduit d'admission.

Les moyens de transfert peuvent aussi comporter une douille tubulaire en matériau conducteur thermique fixée sur ladite plaque, ladite douille formant au moins une partie dudit canal.

La plaque peut être disposée entre le répartiteur d'admission et la culasse dudit moteur et être en contact thermique avec sensiblement la totalité de a surface commune entre la culasse dudit moteur et le répartiteur d'admission. Par sensiblement la totalité de la surface commune, il est entendu au sens de la présente description au moins 50%, de préférence au moins 75% et de manière très préférée au moins 90% de la surface commune.

La plaque entretoise sera en général dimensionnée par toute technique connue de l'homme de l'art de telle façon que sa mise en place dans ledit moteur ne nécessite pas de modification des éléments constitutifs dudit moteur ou de modification rédhibitoire de leur positionnement. Par exemple, l'épaisseur de ladite plaque entretoise pourra être choisie en fonction de différents paramètres, tels que l'efficacité recherchée de ladite plaque dans le transfert des calories, la surface en contact avec l'air d'admission ou encore les conditions de mise en forme de ladite plaque.

Le canal ménagé dans ladite plaque entretoise a un axe coïncide sensiblement avec l'axe moyen du jet liquide issu de l'injecteur.

Le moyen est une douille creuse traversant la plaque entretoise et en contact thermique avec ladite plaque, comprenant au moins un matériau conducteur thermique, ladite douille délimitant un canal dont l'axe coïncide sensiblement avec l'axe moyen du jet liquide issu de l'injecteur. Cette douille permet ainsi avantageusement lors de l'injection du GPL de confiner celui-ci dans une zone exempte d'air et par suite d'éviter la formation de givre à proximité de celui-ci.

Le contact et l'échange thermique entre ladite douille et l'entretoise sera optimisé selon toute technique connue de l'homme du métier. Par exemple, la douille pourra être emmanchée serrée, vissée, soudée ou directement moulée et usinée avec la plaque entretoise, ou obtenue par emboutissage. La douille sera faite dans un matériau très bon conducteur thermique, le plus souvent métallique, de telle façon que l'échange thermique entre ladite douille et la plaque entretoise soit optimisé.

Ladite douille pourra par exemple se prolonger au-delà de la paroi de la plaque entretoise vers le nez de l'injecteur, sans toutefois entrer en contact thermique avec celui-ci et/ou vers le conduit d'admission, de façon à augmenter la surface de contact et par suite les calories disponibles sur la paroi extérieure de la douille en contact avec l'air d'admission, contribuant ainsi à maîtriser la formation de givre. Ladite plaque entretoise et ladite douille creuse comprendront au moins un matériau conducteur thermique, en général métalique et de préférence pouvant être facilement mis en forme et/ou usiné. Avantageusement, ladite plaque et ladite douille comprendront indépendamment au moins un matériau compris d'une façon non limitative dans le groupe constitué par le laiton, le bronze, l'aluminium, le cuivre, l'acier.

Le répartiteur d'admission peut être avantageusement construit dans un matériau isolant thermique tel par exemple un matériau composite ou un matériau polymère tel que par exemple un polyamide. Dans le cadre de l'invention, ledit répartiteur d'admission pourra également comprendre un matériau conducteur thermique.

II est possible selon l'invention d'associer une plaque entretoise à chaque point d'injection du carburant dans ledit moteur.

Il est également possible sans sortir du cadre de l'invention d'utiliser une seule plaque entretoise pour tous les points d'injection du carburant dans ledit moteur.

Bien que le présent dispositif permette de contrôler efficacement la formation de givre à proximité de la zone d'évaporation du carburant injecté et de l'éviter au voisinage du nez de l'injecteur par transfert et canalisation des calories issues d'une partie chaude du moteur, l'incorporation d'un système de chauffage supplémentaire de ladite plaque, ou de ladite douille, pourra être envisagée sans sortir du cadre de l'invention. Par exemple, ledit système de chauffage additionnel fonctionnera par effet joule, ou comprendra avantageusement une circulation d'un fluide chaud disponible dans le moteur, par exemple l'huile moteur ou l'eau du circuit de refroidissement.

La présente invention sera mieux comprise et ses avantages apparaîtront plus clairement à la lecture des exemples suivants, nullement limitatifs, et illustrés par les figures ci-après annexées, parmi lesquelles :
- la figure 1 présente en coupe un dispositif d'injection comprenant un premier type de répartiteur d'admission,
- la figure 2 présente en coupe une variante du dispositif d'injection comprenant un autre type de répartiteur d'admission.

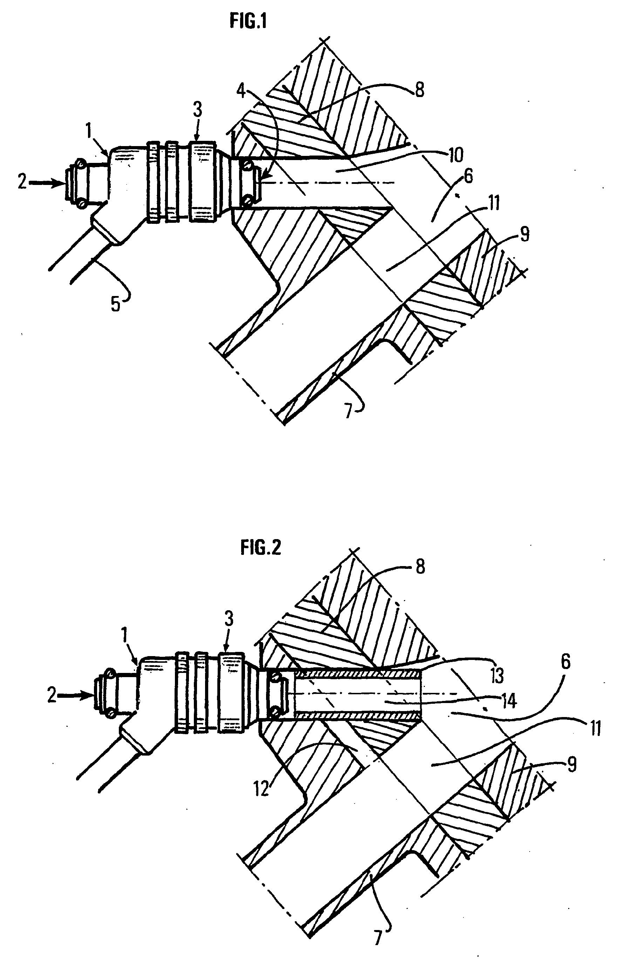

En se reportant à la figure 1, le dispositif d'injection représenté permet d'injecter le carburant GPL grâce à un injecteur électromagnétique de type connu (1) et conventionnellement utilisé pour une injection d'essence. TI comprend une entrée pour le carburant (2), un corps (3) et un nez (4) comprenant un orifice de sortie du carburant (non représenté). L'ouverture et la fermeture de l'injecteur sont commandés par un calculateur (non représenté) via des conducteurs électriques (5). Le dispositif d'injection permet d'injecter le carburant vers un conduit d'admission (6) en communication avec un répartiteur d'admission (7) construit dans un matériau isolant thermique. Le répartiteur (7) conduit l'air d'admission à l'entrée du conduit d'admission (6) du moteur. Une plaque entretoise (8) en matériau métallique très bon conducteur thermique est intercalée sur toute la surface de contact entre la culasse du moteur (9) et l'embase du répartiteur d'admission (7). Il est évident selon la figure 1 que ladite plaque (8) est construite et placée de telle façon qu'elle ne gêne en rien le passage de l'air d'admission du répartiteur au conduit d'admission (6). A cette fin, on a ménagé dans ladite plaque une ouverture (11) de dimension et forme sensiblement identiques à celles du conduit du répartiteur (7).

La plaque entretoise est d'autre part percée dans sa partie en regard avec le nez de l'injecteur d'un canal (10) dont l'axe coïncide sensiblement avec l'axe moyen du jet de carburant issu du nez (4) de l'injecteur (1).

L'injecteur (1) est fixé sur l'embase du répartiteur comme il est normalement fixé dans le cas d'utilisation pour l'injection d'essence, donc sa position conserve la même orientation par rapport au conduit d'admission du moteur, mais est reculée de l'épaisseur de la plaque (8) qui joue ainsi le rôle d'une entretoise. On a ainsi aménagé un canal entre l'orifice d'admission sur la culasse et le nez de l'injecteur, dans lequel le carburant GPL est injecté sous forme liquide. Il est clair que c'est à l'intérieur de ce canal que se passe l'injection liquide, et que ce conduit débouche dans le conduit d'admission.

Lors de la phase d'admission du moteur, le calculateur commande électriquement la mise en action de l'injecteur. Le jet de carburant sous forme liquide alors issu dudit l'injecteur (1) traverse le canal aménagé dans la plaque entretoise chauffée par la culasse moteur (9). Ainsi, dans la zone où la réaction endothermique est la plus importante, les parois du canal sont suffisamment chaudes pour éviter la formation de givre. L'échange thermique entre ladite plaque et la culasse permet de prévenir la formation de glace dans le dispositif et notamment au niveau du nez de l'injecteur. De plus, l'injecteur est selon cette configuration isolé thermiquement de toute partie chaude du dispositif et en particulier de la plaque entretoise, de telle sorte que le carburant qui traverse le corps (3) de l'injecteur (1) jusqu'à son orifice de sortie au niveau du nez (4) de l'injecteur reste à l'abri d'un apport de chaleur produit par l'entretoise (8) chauffée par la culasse (9) du moteur.

Par ailleurs, le recul du nez de l'injecteur par rapport à la tubulure du répartiteur d'air limite la présence d'air chargé en humidité dans le voisinage de l'injecteur, ce qui favorise l'absence de givre.

En outre, l'air d'admission est réchauffé au contact de l'entretoise (8).

Dans le mode de réalisation schématisé par la figure 2, on a représenté un répartiteur d'admission tel que l'un de ceux fréquemment utilisés par les constructeurs et présentant pour des impératifs de fabrication une zone évidée (12). Il a été constaté expérimentalement que du givre se formait, lors d'un fonctionnement en GPL sous forme liquide, dans ladite zone (12) par exemple lorsque la configuration selon la figure 1 était employée avec ce type de répartiteur à évidement. L'accumulation de ce givre perturbe l'arrivée de l'air dans le conduit d'admission (6). En effet, il est clair que la zone évidée (12) est une zone d'écoulement « mort » où l'accumulation est favorisée.

La figure 2 présente pour ce type de répartiteur un deuxième mode de réalisation de l'invention en grande partie identique au précédent mais dans lequel le passage (14) pour ledit carburant à travers la plaque entretoise (8) est délimité par une douille tubulaire (13). La douille creuse ainsi placée permet d'obstruer la zone évidée (12) et est rendue solidaire de la plaque (8) par toute technique appropriée. La douille (13) est fabriquée dans un matériau très bon conducteur pour favoriser les échanges thermiques, d'une part entre la plaque entretoise, et d'autre part avec l'air d'admission présent dans la zone évidée (12). Ladite douille (13) se prolonge au-delà de la paroi de la plaque entretoise, d'un coté vers le nez de l'injecteur sans toutefois entrer en contact thermique avec celui-ci, et de l'autre coté vers le conduit d'admission (6). Cette variante permet d'augmenter la surface d'échange thermique entre l'entretoisé et le conduit en regard de l'injecteur. En effet, la surface des parois chaude peut être plus importante que dans le cas de la variante selon la figure 1.

Bien que ce deuxième mode de réalisation s'applique particulièrement bien à un répartiteur présentant une zone évidée (12), il est bien sûr entendu qu'il s'applique sans sortir du cadre de l'invention à tout type de répartiteur d'admission, et particulièrement celui présenté sur la figure 1.

## Revendications

1. Dispositif d'injection liquide d'un carburant présentant un point d'ébullition inférieur à la température ambiante, à la pression atmosphérique, dans un conduit d'admission (6) d'un moteur à combustion interne, ledit dispositif comprenant au moins un injecteur (L) fixé sur l'embase d'un répartiteur d'admission (7) et au moins un canal de transport (10; 14) dudit carburant entre l'orifice de sortie (4) de l'injecteur et ledit conduit d'admission (6), et des moyens de transfert (8) de chaleur entre une partie chaude (9) du moteur et une portion de la paroi interne dudit canal, **caractérisé en ce que** les moyens de transfert comprennent une plaque (8) en un matériau conducteur thermique intercalée entre l'embase du répartiteur d'admission (7) et la culasse (9) dudit moteur et dans laquelle est ménagée une portion au moins des parois dudit canal (10) et une portion au moins des parois dudit conduit d'admission (6).

2. Dispositif selon la revendication 1, dans lequel lesdits moyens de transfert comportent une douille tubulaire (13) en un matériau conducteur thermique fixée sur ladite plaque (8), ladite douille formant au moins une partie dudit canal (14).

3. Dispositif selon la revendication 2, dans lequel ladite douille (13) se prolonge au-delà des parois de ladite plaque (8).

4. Dispositif selon l'une des revendications précédentes, dans lequel ladite plaque (8) comprend au moins un matériau compris dans le groupe constitué par le laiton, le bronze, l'aluminium, le cuivre, l'acier.

5. Dispositif selon l'une des revendications 2 ou 3, dans lequel la douille (13) comprend au moins un matériau compris dans le groupe constitué par le laiton, le bronze, l'aluminium, le cuivre, l'acier.

6. Dispositif selon l'une des revendications précédentes, dans lequel est associée une plaque à chaque point d'injection du carburant dans ledit moteur.

7. Dispositif selon l'une des revendications 1 à 6, dans lequel ladite plaque correspond à la surface totale de l'embase du répartiteur d'air.

8. Dispositif selon l'une des revendications précédentes, dans lequel lesdits moyens de transfert comportent au moins l'un des moyens de chauffage suivants ; par effet Joule, et par circulation d'un fluide chaud.

## Claims

1. A device for the liquid injection of a fuel having a boiling point lower than the ambient temperature, at atmospheric pressure, into an intake conduit (6) of an internal combustion engine, said device comprising at least one injector (1) fixed on the seat of an intake distributor (7) and at least one transport channel (10; 14) of said fuel between the outlet (4) of the injector and said intake conduit (6), and means for transferring (8) heat between a hot part (9) of the engine and a portion of the inner wall of said channel, **characterised in that** the transfer means comprise a plate (8) made of a heat conducting material interposed between the seat of the intake distributor (7) and the cylinder head (9) of said engine and in which there is arranged a portion at least of the walls of said channel (10) and a portion at least of the walls of said intake conduit (6).

2. The device according to Claim 1, in which said transfer means include a tubular sleeve (13) made of a heat conducting material fixed on said plate (8), wherein said sleeve forms at least one part of said channel (14).

3. The device according to Claim 2, in which said sleeve (13) protrudes beyond the walls of said plate (8).

4. The device according to one of the preceding claims, in which said plate (8) comprises at least one material from the group constituted by brass, bronze, aluminium, copper, steel.

5. The device according to one of claims 2 or 3, in which the sleeve (13) comprises at least one material from the group constituted by brass, bronze, aluminium, copper, steel.

6. The device according to one of the preceding claims, in which one plate is associated to each injecting point of fuel into said engine.

7. The device according to one of claims 1 to 6, in which said plate fits the total surface of the seat of the air distributor.

8. The device according to one of the preceding claims, in which said transfer means include at least one of the following heating means: by Joule effect, and by circulating a hot fluid.

## Patentansprüche

1. Vorrichtung zur Flüssigeinspritzung eines Kraftstoffs, der bei Atmosphärendruck einen Siedepunkt unterhalb der Umgebungstemperatur aufweist, in eine Einlassleitung (6) eines Verbrennungsmotors, wobei die Vorrichtung mindestens eine Einspritzdüse (1), die auf dem Unterteil einer Ansaugleitung (7) befestigt ist, und mindestens einen Kanal zum Transport (10; 14) des Kraftstoffs zwischen der Auslassöffnung (4) der Einspritzdüse und der Einlassleitung (6), und Mittel zur Wärmeübertragung (8) zwischen einem heißen Teil (9) des Motors und einem Abschnitt der Innenwand des Kanals umfasst, **dadurch gekennzeichnet, dass** die Mittel zur Übertragung eine Platte (8) aus einem thermisch leitenden Material umfassen, die zwischen dem Unterteil der Ansaugleitung (7) und dem Zylinderkopf (9) des Motors eingefügt ist, und in der mindestens ein Abschnitt der Wände des Kanals (10) und mindestens ein Abschnitt der Wände der Einlassleitung (6) angeordnet ist.

2. Vorrichtung nach Anspruch 1, wobei die Mittel zum Transport eine röhrenförmige Hülse (13) aus einem thermisch leitenden Material umfassen, die auf der Platte (8) befestigt ist, wobei die Hülse mindestens einen Teil des Kanals (14) bildet.

3. Vorrichtung nach Anspruch 2, wobei die Hülse (13) sich über die Wände der Platte (8) hinaus verlängert.

4. Vorrichtung nach einem der vorhergehenden Ansprüche, wobei die Platte (8) mindestens ein Material aus der Gruppe gebildet aus Messing, Bronze, Aluminium, Kupfer, Stahl umfasst.

5. Vorrichtung nach einem der Ansprüche 2 oder 3, wobei die Hülse (13) mindestens ein Material aus der Gruppe gebildet aus Messing, Bronze, Aluminium, Kupfer, Stahl umfasst.

6. Vorrichtung nach einem der vorhergehenden Ansprüche, wobei eine Platte mit jedem Einspritzpunkt des Brennstoffs in den Motor assaziiert ist.

7. Vorrichtung nach einem der Ansprüche 1 bis 6, wobei die Platte der Gesamtfläche des Unterteils des Luftsammlers entspricht.

8. Vorrichtung nach einem der vorhergehenden Ansprüche, wobei die Mittel zur Übertragung mindestens eines der folgenden Mittel zur Erwärmung umfassen: durch Joule-Effekt und durch Zirkulation eines heißen Fluids.
